## Europäisches Patentamt

## European Patent Office

## Office européen des brevets

(11) Veröffentlichungsnummer: **0 261 153**
**B1**

---

(12) **EUROPÄISCHE PATENTSCHRIFT**

(45) Veröffentlichungstag der Patentschrift: **04.07.90**

(51) Int. Cl.⁵: **G 01 P 15/12**

(21) Anmeldenummer: **87901352.2**

(22) Anmeldetag: **25.02.87**

(86) Internationale Anmeldenummer:
**PCT/DE87/00067**

(87) Internationale Veröffentlichungsnummer:
**WO 87/05704 24.09.87 Gazette 87/21**

---

(54) **BESCHLEUNIGUNGSAUFNEHMER.**

---

(30) Priorität: **20.03.86 DE 8607653 u**

(43) Veröffentlichungstag der Anmeldung:
**30.03.88 Patentblatt 88/13**

(45) Bekanntmachung des Hinweises auf die
Patenterteilung:
**04.07.90 Patentblatt 90/27**

(84) Benannte Vertragsstaaten:
**DE FR GB IT**

(56) Entgegenhaltungen:
**DE-A-2 803 781**
**US-A-4 311 980**

(73) Patentinhaber: **ROBERT BOSCH GMBH**
**Postfach 50**
**D-7000 Stuttgart 1 (DE)**

(72) Erfinder: **SEIPLER, Dieter**
**Paul-Hindemith-Str. 1**
**D-7410 Reutlingen (DE)**

---

Courier Press, Leamington Spa, England.

# Beschreibung

## Stand der Technik

In der Schrift US—A—4 311 980 wird ein Sensor beschrieben, der eine Biegefeder aufweist. Diese ist einseitig eingespannt, und mit Hilfe von z.B. piezoelektrischen Elementen wird die Durchbiegung der Biegefeder bestimmt. Eine Auswerteschaltung ist getrennt von den Elementen angeordnet. Der Aufbau ist dadurch kompliziert.

Ferner ist aus der Druckschrift DE—A—2 803 781 eine Beschleunigungsaufnehmer bekannt, bei dem eine Biegefeder auf einem Ende fest eingespannt ist und auf dem anderen Ende eine seismische Masse aufweist. Ferner sind auf der Biegefeder die Dehmeßstreifen angeordnet. Auf zusätzlich im Gehäuse angordneten Leiterplatten ist die mit den Dehmeßstreifen verbundene Auswerteschaltung aufgebracht. Die Biegefeder selbst besteht nicht aus einem keramschen Material, so daß weder eine Auswerteschaltung noch die Dehnmeßstreifen in Drucktechnik aufgebracht werden können.

## Vorteile der Erfindung

Der erfindungsgemäße Beschleunigungsaufnehmer mit den Merkmalen des Hauptanspruchs hat demgegenüber den Vorteil, daß Beschleunigung und Verzögerung, insbesondere bei einem Unfall des Kraftfahrzeugs, sobald sie bestimmte Grenzwerte überschreiten, sicher erfaßbar sind. Dabei ist ein besonders einfacher und daher auch störungsfreier Aufbau gewährleistet. Da die Widerstände und die Auswertschaltung auf einer gleichzeitig als Biegefeder dienenden Substratplatte angeordnet sind, baut der Beschleunigungsaufnehmer besonders montagefreundlich, preisgünstig und einfach. Übertragungsverluste in den Leitungen zwischen den Widerständen und der Auswerteschaltung können weitgehend vermieden werden. Die Störempfindlichkeit ist gering.

## Zeichnung

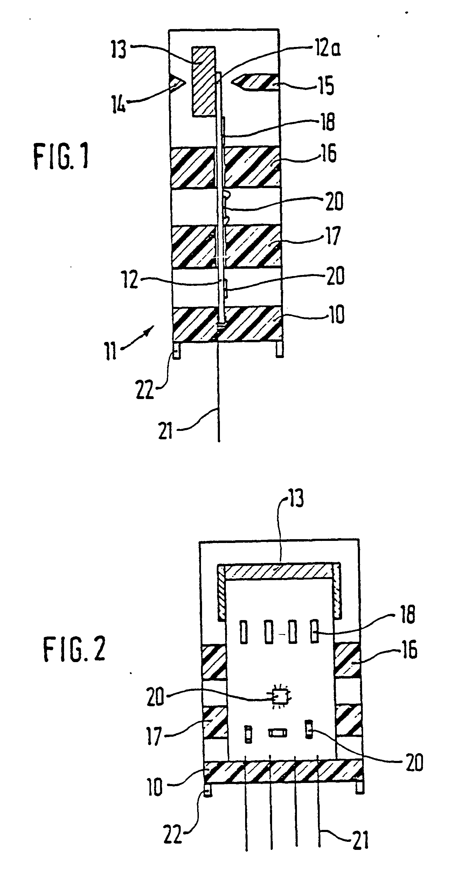

Ein Ausfürhrungsbeispiel der Erfindung ist in der Zeichnung dargestellt und in der nachfolgenden Beschreibung näher erläutert. Es zeigen Figur 1 einen Querschnitt durch einen Beschleunigungsaufnehmer und Figur 2 eine Draufsicht.

## Beschreibung des Ausführungsbeispiels

In Figur 1 ist mit 10 das hohlkörperförmig Kunststoffgehäuse eines Beschleunigungsaufnehmers 11 bezeichnet, dessen Biegefeder 12 einseitig eingespannt ist. Die Biegefeder 12 ist eine Keramik-Substratplatte, z.B. aus Aluminiumoxid ($Al_2O_3$), an deren freies Ende 12a als seismische Masse ein Metallblock oder Keramikblock 13 angeordnet ist. Im Bereich des Metallblocks 13 sind am Kunstoffgehäuse 10 zwei mechanische Anschläge 14, 15 ausgebildet, die die maximale Auslenkung der Biegefeder 12 begrenzen. Ferner befinden sich im Gehäuse 10 zwei Gegenhalter 16, 17, die von der Ober- und Unterseite her fast an der Biegefeder 12 anliegen und so einen sogenannten Nichtbiegebereich der Biegefeder bilden. Die Biegefeder 12 soll sich also nur zwischen dem Metallblock 13 und dem Gegenhalter 16 durchbiegen. In diesem Bereich sind auch mehrere dehnungsempfindliche Sensorwiderstände 18 angeordnet. Die Sensorwiderstände 18 sind in sogenannter Dickschichttechnik auf der Biegefeder 12 aufgebracht. Ferner befindet sich zwischen den Gegenhaltern 16, 17 und zwischen dem Gegenhalter 17 und dem, Gehäuse 10 auf der Biegefeder 12 eine Auswerteschaltung 20. Auch die Auswerteschaltung 20 ist in Dickschichttechnik aufgebracht. Sie weist aktive, z.B. verstärkende Glieder (Halbleiter), und massive, z.B. R-, C-, L-Bauelemente auf.

Von der Auswerteschaltung 20 führen elektrische Leitungen 21 zu einem nicht dargestellten Steuergerät, das die Insassenschutzvorrichtungen des Kraftfahrzeugs wie z.B. Gurtstraffer, Airbag, Überrollbügel, Warnblinkanlage, Zentralverriegelung oder auch das Antiblockiersystem für die Bremsen ausgelöst werden können. An der Unterseite des Gehäuses 10 befinden sich Fixierzapfen 22, mit deren Hilfe der Beschleunigungsaufnehmer 11 auf einer Leiterplatte anbaubar ist.

Die Funktion eines Beschleunigungsaufnehmers ist hinreichend bekannt und deshalb hier nicht genauer beschrieben. Wird der Metallblock 13 aus seiner Ruhelage ausgelenkt, so wird die Biegefeder 12 im Bereich der Widerstände 18 gebogen und in diesen eine proportionale Widerstandsänderung erzeugt. Diese Widerstandsänderung wird in der Auswerteschaltung 20 ausgewertet und an das Steuergerät weitergeleitet.

Da die Biegefeder eine Substratplattet ist, können die Widerstände 18 und die Auswerteschaltung 20 in einem einzigen Arbeitsgang in Dickschichttechnik aufgebracht werden. Der Verpakkungsaufwand ist minimal.

## Patentansprüche

1. Beschleunigungsaufnehmer zum Auslösen von Insassenschutzvorrichtungen in Kraftfahrzeugen mit einer an einem Ende eingespannten, als Biegeschwinger wirkenden Biegefeder (12), an derem freien Ende (12a) eine seismische Masse (13) angeordnet ist, wobei die Beigefeder (12) eine Substratplatte ist, auf der eine Auswerteschaltung (20) und mindestens eine dehnungsempfindlicher Widerstand (18) angeordnet sind.

2. Beschleunigungsaufnehmer nach Anspruch 1, dadurch gekennzeichnet, daß der Widerstand oder die Widerstände (18) Dickschichtwiderstände sind.

## Revendications

1. Capteur d'accélération pour déclencher les dispositifs de protection des passagers de véhicules automobiles, comprenant un ressort de flexion (12) fonctionnant comme oscillateur de flexion (12), dont une extrémité est encastrée et dont l'extrémité (12a) porte une masse seismique (13), le ressort de flexion (12) étant une plaque de support portant un circuit d'exploitation (20) et au moins une résistance (18) sensible à la direction.

2. Capteur d'accélération selon la revendication 1, caractérisé en ce que la ou les résistances (18) sont des résistances réalisées en couches épaisses.

**Claims**

1. Acceleration pick-up for triggering passenger safety devices in motor vehicles, having a bending spring (12) which is clamped at one end, acts as a flexural vibrator and at the free end (12a) of which is arranged a seismic mass (13), the bending spring (12) being a substrate plate on which an evaluation circuit (20) and at least one strain-sensitive resistor (18) are arranged.

2. Acceleration pick-up according to Claim 1, characterized in that the resistor or the resistors (18) are thick-film resistors.

FIG.1

FIG.2